# EUROPEAN PATENT APPLICATION

(11) **EP 4 741 245 A1**
(43) Date of publication of application: **13.05.2026**
(21) Application number: 24212364.4
(22) Date of filing: 12.11.2024
(51) Int. Cl.: B60W 30/18

(54) **OVERTAKING FOR VEHICLE COMBINATIONS**

(71) Applicant: Volvo Truck Corporation, 405 08 Göteborg (SE)
(72) Inventor: GELSO, Esteban, VÄSTRA FRÖLUNDA (SE); SADEGHI KATI, Maliheh, ÖJERSJÖ (SE); LAINE, Leo, GÖTEBORG (SE)
(74) Representative: Ström & Gulliksson AB

(57) **Abstract**

A computer system and computer-implemented method are disclosed for identifying an overtaking opportunity for a host vehicle combination comprising a tractor unit and at least one trailing unit. The computer system comprises processing circuitry configured to: acquire parameters of at least one vehicle preceding the host vehicle combination; determine a visible range, R, from the host vehicle combination for an upcoming section of a route; and identify an overtaking opportunity by determining that the host vehicle combination can perform an overtaking manoeuvre over the at least one preceding vehicle within the visible range, R, in a stable manner based on the acquired parameters of the at least one preceding vehicle.

## Description

### TECHNICAL FIELD

The disclosure relates generally to vehicle control. In particular aspects, the disclosure relates to overtaking for vehicle combinations. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In vehicle motion management, control of multi-unit vehicle combinations is challenging due to the complexity of coordinating and manoeuvring multiple vehicle units together. Unlike single vehicles, these vehicle combinations require careful consideration of each vehicle unit's dynamic and the interaction between them. These multi-unit configurations often exhibit complex interactions, such as inter-vehicle communication, varying states, and dynamic behaviours.

Conventional navigation systems and advanced driver-assistance systems (ADAS) are often insufficient in addressing the specific needs of multi-unit vehicle combinations, leaving drivers with limited support and increased risk of accidents or damage to property and cargo. Existing solutions may not properly account for the dimensions and handling characteristics of these vehicles. This is a particular issue during overtaking manoeuvres, where driver visibility is also a concern.

It is therefore desired to provide systems, methods and other approaches for vehicle motion management that attempt to resolve or at least mitigate one or more of these issues.

### SUMMARY

This disclosure provides systems, methods and other approaches for determining an overtaking opportunity for a vehicle combination. In particular, it is proposed to determine opportunities along an upcoming section of road where a host vehicle combination can perform an overtaking manoeuvre on at least one preceding vehicle within a visible range from the host vehicle combination and in a stable manner. This can be achieved by determining if a time or distance for the host vehicle combination to perform a stable overtaking manoeuvre on a preceding vehicle is less than a time for the host vehicle combination to travel the visible range. Alternatively, this can be achieved by determining if a stability measure of an overtaking manoeuvre performed within the visible range is above a threshold stability. A stable overtaking manoeuvre can be defined by the amount of rearward amplification, rollover risk, or off-tracking experienced by the host vehicle combination during the overtaking manoeuvre. For example, the time or distance for the host vehicle combination to perform a stable overtaking manoeuvre may be longer in order to reduce trailer oscillations.

In this way, overtaking opportunities for the vehicle combination can be determined that enable stable overtaking of a preceding vehicle. The overtaking opportunities can be determined based on one or more of route parameters (such as turn radii, road slope, and surface friction), vehicle combination parameters (such as length, width, mass, maximum velocity, and maximum acceleration, combination configuration, type of coupling, and load distribution), preceding vehicle parameters (such as length, width, and velocity), and environmental parameters (such as weather conditions and traffic). This ensures that appropriate overtaking opportunities are determined based on current conditions. The determination of overtaking opportunities can be used in a selection between two or more routes based on the availability and stability of overtaking possibilities.

According to a first aspect of the disclosure, there is provided computer system for identifying an overtaking opportunity for a host vehicle combination comprising a tractor unit and at least one trailing unit, the computer system comprising processing circuitry configured to: acquire parameters of at least one vehicle preceding the host vehicle combination; determine a visible range from the host vehicle combination for an upcoming section of a route; and identify an overtaking opportunity by determining that the host vehicle combination can perform an overtaking manoeuvre over the at least one preceding vehicle within the visible range in a stable manner based on the acquired parameters of the at least one preceding vehicle.

The first aspect of the disclosure may seek to identifying overtaking opportunities for the vehicle combination that enable stable overtaking of a preceding vehicle. The overtaking opportunities can be determined based on one or more of route parameters, vehicle combination parameters, preceding vehicle parameters, and environmental parameters, which ensures that appropriate overtaking opportunities are determined based on current conditions.

Optionally in some examples, including in at least one preferred example, the processing circuitry is configured to: determine a first time or longitudinal distance for the host vehicle combination to travel the visible range; determine a second time or longitudinal distance for the host vehicle combination to perform an overtaking manoeuvre on the at least one preceding vehicle in a stable manner, based on the acquired parameters of the at least one preceding vehicle; and determine that the second time or longitudinal distance is less than the first time or longitudinal distance. A technical benefit may include that a first approach is provided for identifying overtaking opportunities for the vehicle combination that enable stable overtaking of a preceding vehicle.

Optionally in some examples, including in at least one preferred example, the second time or longitudinal distance comprises: a time or longitudinal distance to make a first lateral movement beyond the width of the at least one preceding vehicle, a time or longitudinal distance to make a longitudinal movement past the length of the at least one preceding vehicle, and a time or longitudinal distance to make a second lateral movement in an opposite direction to the first lateral movement. A technical benefit may include that a possible overtaking manoeuvre can be assessed based on different stages of motion, which can be assessed individually in terms of their stability.

Optionally in some examples, including in at least one preferred example, the processing circuitry is configured to: determine a stability measure of an overtaking manoeuvre by the host vehicle combination over the at least one preceding vehicle within the visible range based on the acquired parameters of the at least one preceding vehicle; and determine that the stability measure is above a threshold stability. A technical benefit may include that a second approach is provided for identifying overtaking opportunities for the vehicle combination that enable stable overtaking of a preceding vehicle.

Optionally in some examples, including in at least one preferred example, the parameters of the at least one preceding vehicle comprise one or more of a longitudinal velocity, a longitudinal acceleration, a lateral velocity, a lateral acceleration, a length, a width, and a type of the at least one preceding vehicle. A technical benefit may include that a detailed assessment of the motion of the preceding vehicle can be taken into account when determining the stability of a possible overtaking manoeuvre.

Optionally in some examples, including in at least one preferred example, the processing circuitry is configured to determine that the host vehicle combination can perform an overtaking manoeuvre over the at least one preceding vehicle within the visible range in a stable manner based on at least one of one or more route parameters, one or more host vehicle combination parameters, and one or more environmental parameters. A technical benefit may include that a detailed assessment of the motion of the current conditions affecting motion of the vehicle combination can be taken into account when determining the stability of a possible overtaking manoeuvre.

Optionally in some examples, including in at least one preferred example, an overtaking manoeuvre performed in a stable manner comprises one or more of a rearward amplification, a rollover risk, and an off-tracking of the host vehicle combination being below a respective threshold value. A technical benefit may include that different measures of stability can be taken into account when determining the stability of a possible overtaking manoeuvre.

Optionally in some examples, including in at least one preferred example, the rearward amplification is defined as: the ratio of the maximum absolute yaw rate of a trailing unit of the host vehicle combination to the maximum absolute yaw rate of a tractor unit of the host vehicle combination; or the ratio of the maximum absolute lateral acceleration of a trailing unit of the host vehicle combination to the maximum absolute lateral acceleration of a tractor unit of the host vehicle combination. A technical benefit may include that a quantitative assessment of the stability of a manoeuvre can be provided.

Optionally in some examples, including in at least one preferred example, the processing circuitry is further configured to determine one or more control inputs for the host vehicle combination to perform the overtaking manoeuvre. A technical benefit may include that the vehicle combination can be controlled to perform an overtaking manoeuvre at an appropriate time and/or location and in a stable manner.

Optionally in some examples, including in at least one preferred example, the processing circuitry is further configured to: determine that a stability measure during performance of the overtaking manoeuvre by the host vehicle combination is below a threshold stability; and update the one or more control inputs such that stability measure is above the threshold stability. A technical benefit may include that control of the vehicle combination can be adjusted to take into account any changes in the stability of the manoeuvre, for example due to changes in route geometry, motion of the host vehicle, and/or environmental conditions.

Optionally in some examples, including in at least one preferred example, the processing circuitry is further configured to update the one or more control inputs during performance of the overtaking manoeuvre by the host vehicle combination based on updated parameters of the at least one preceding vehicle. A technical benefit may include that control of the vehicle combination can be adjusted to take into account any changes in the stability of the manoeuvre, for example due to changes in the motion of the at least one preceding vehicle.

According to a second aspect of the disclosure, there is provided a vehicle comprising the system of the first aspect. The second aspect of the disclosure may seek to provide a vehicle capable of identifying overtaking opportunities that enable stable overtaking of a preceding vehicle.

According to a third aspect of the disclosure, there is provided a computer-implemented method for determining an overtaking opportunity for a host vehicle combination comprising a tractor unit and at least one trailing unit, the computer-implemented method comprising: acquiring, by processing circuitry of a computer system, parameters of at least one vehicle preceding the host vehicle combination; determining, by the processing circuitry, a visible range from the host vehicle combination for an upcoming section of a route; and identifying, by the processing circuitry, an overtaking opportunity by determining that the host vehicle combination can perform an overtaking manoeuvre over the at least one preceding vehicle within the visible range in a stable manner based on the acquired parameters of the at least one preceding vehicle.

The third aspect of the disclosure may seek to identify overtaking opportunities for the vehicle combination that enable stable overtaking of a preceding vehicle. The overtaking opportunities can be determined based on one or more of route parameters, vehicle combination parameters, preceding vehicle parameters, and environmental parameters, which ensures that appropriate overtaking opportunities are determined based on current conditions.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to identify overtaking opportunities that enable stable overtaking of a preceding vehicle.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to identify overtaking opportunities that enable stable overtaking of a preceding vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically shows a top view of a vehicle combination according to an example of the disclosure.
**FIG. 2** illustrates a route along which a vehicle combination may travel according to an example of the disclosure.
**FIG. 3** illustrates a section of road according to an example of the disclosure, such as a section of the route shown in **FIG.2****.**
**FIG. 4** is a flow chart of a computer-implemented method according to an example of the disclosure.
**FIG. 5** is a flow chart of a computer-implemented method according to another example of the disclosure.
**FIG. 6** is a flow chart of a computer-implemented method according to another example of the disclosure.
**FIG. 7** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

In vehicle motion management, control of multi-unit vehicle combinations is challenging due to the complexity of coordinating and manoeuvring multiple vehicle units together. These multi-unit configurations often exhibit complex interactions, such as inter-vehicle communication, varying states, and dynamic behaviours. Existing solutions may not properly account for the dimensions and handling characteristics of these vehicles, leaving drivers with limited support and increased risk of accidents or damage to property and cargo. This is a particular issue during overtaking manoeuvres, where driver visibility is also a concern.

To remedy this, systems, methods and other approaches for determining an overtaking opportunity for a vehicle combination. In particular, it is proposed to determine opportunities along an upcoming section of road where a host vehicle combination can perform an overtaking manoeuvre on at least one preceding vehicle within a visible range from the host vehicle combination and in a stable manner. This can be achieved by determining if a time or distance for the host vehicle combination to perform a stable overtaking manoeuvre on a preceding vehicle is less than a time for the host vehicle combination to travel the visible range. Alternatively, this can be achieved by determining if a stability measure of an overtaking manoeuvre performed within the visible range is above a threshold stability. A stable overtaking manoeuvre can be defined by the amount of rearward amplification, rollover risk, or off-tracking experienced by the host vehicle combination during the overtaking manoeuvre. For example, the time or distance for the host vehicle combination to perform a stable overtaking manoeuvre may be longer in order to reduce trailer oscillations.

In this way, overtaking opportunities for the vehicle combination can be determined that enable stable overtaking of a preceding vehicle. The overtaking opportunities can be determined based on one or more of route parameters (such as turn radii, road slope, and surface friction), vehicle combination parameters (such as length, width, mass, maximum velocity, and maximum acceleration, combination configuration, type of coupling, and load distribution), preceding vehicle parameters (such as length, width, and velocity), and environmental parameters (such as weather conditions and traffic). This ensures that appropriate overtaking opportunities are determined based on current conditions.

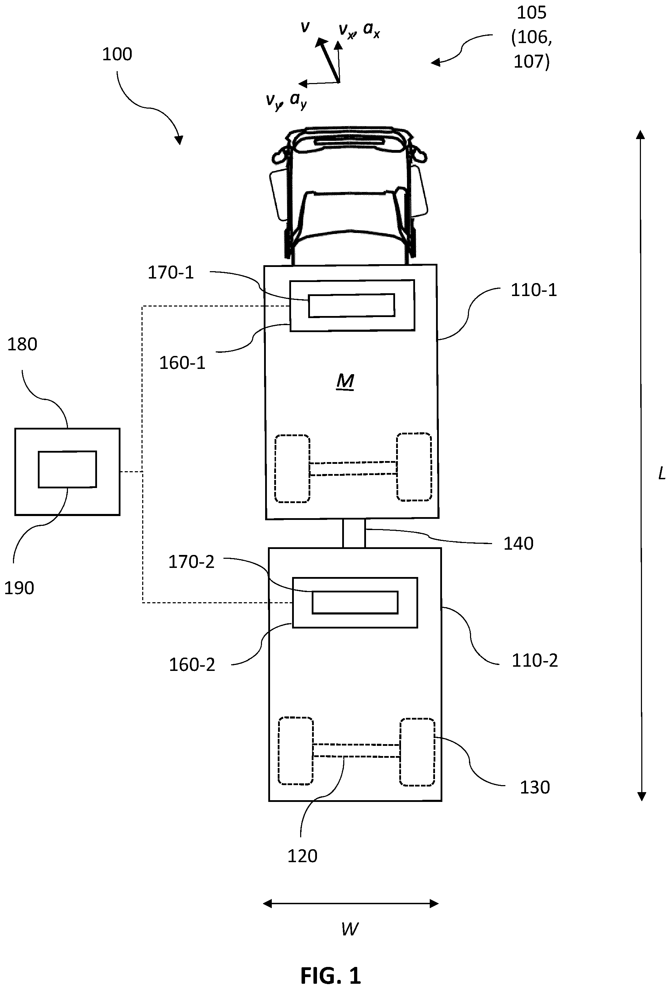

**FIG. 1** schematically shows a top view of an example vehicle combination **100** of the type considered in this disclosure. The vehicle combination **100** comprises a number of units **110,** including a tractor unit **110-1** and a trailing unit **110-2**. Whilst a single trailing unit **110-2** is shown, it will be appreciated that the vehicle combination **100** may comprise further trailing units. This gives rise to different types and designations of vehicle combinations. The vehicle combination **100** shown in **FIG. 1** is an example of a truck, however the systems and methods disclosed herein can be used with any suitable form of vehicle combination **100,** such as trucks, buses, and the like.

A tractor unit, such as the tractor unit **110-1,** is generally the foremost unit in a vehicle combination **100,** and may comprise the cabin for the driver, including steering controls, dashboard displays and the like. Generally, the tractor unit **110-1** is used to provide propulsion power/torque for the vehicle combination **100.** In the example of **FIG. 1****,** the tractor unit **110-1** may also be used to store goods that are being transported by the vehicle combination **100.** A tractor unit may also be referred to as a truck.

A trailing unit, such as the trailing unit **110-2**, is generally used to store goods that are being transported by the vehicle combination **100.** A trailing unit may be a truck, trailer, dolly and the like. A trailing unit may also provide propulsion to the vehicle combination **100.** In vehicle combinations such as that shown in **FIG. 1****,** vehicle motion management may be available on a unit level to receive requests from a manual or virtual driver to coordinate the propulsion, braking and steering.

Each unit **110** comprises a number of axles **120,** each having a number of wheels **130.** It will be appreciated that any suitable number of axles **120** may be provided on the respective units **110.** A trailing unit **110-2** without a front axle is known as a semi-trailer. It will also be appreciated that any number of the tractor axles and/or trailer axles may be driven axles, including zero (i.e. one of the units **110** may include at least one driven axle while the other does not). It will also be appreciated that any suitable number of the tractor axles and/or trailer axles may be steered axles.

The units **110** are connected by a coupling **140.** The coupling **140** may be of any type known in the art, such as a fifth-wheel (kingpin) coupling, a drawbar coupling, a ball and spoon coupling, a converter dolly, and the like.

The vehicle combination **100** may comprise one or more sources of propulsion. For example, one or more of the units **110** may comprise one or more electrical machines such as electric motors. The electrical machines are configured to drive, e.g. provide torque and/or steering to, one or more axles or individual wheels of a unit **110.** The electrical machines of a unit **110** can supply either a positive (propulsion) or negative (braking) force.

Each unit **110** may comprise one or more batteries configured to provide power to the electrical machines. A vehicle combination **100** that uses only battery power is a battery electric vehicle (BEV). In some examples, electric motors may also be operated as generators, in order for the electric motors to generate braking force when required. The use of electrical machines to supply a negative force is known as regenerative braking. The energy recovered from regenerative braking can be stored in the batteries, and so regenerative braking may generally be preferred over using service brakes.

In some examples, for example in the case of a hybrid electric vehicle (HEV), a unit **110,** most often a tractor unit **110-1**, may also include another source of propulsion, for example an internal combustion engine (ICE). The vehicle combination **100** also comprises a drivetrain to deliver mechanical power from the propulsion source (the electrical machines or the ICE) to the wheels. All units **110** may provide propulsion to the vehicle combination **100.** In the examples discussed herein, the vehicle combination **100** may be a BEV or an HEV.

Furthermore, each unit **110** may comprise one or more sets of service brakes. The service brakes of a unit **110** can supply a negative (braking) force. The service brakes may be, for example, frictional brakes such as pneumatic brakes. Pneumatic brakes use a compressor to fill the brake with air, which may be powered by the batteries. In some examples, the brakes may be electro-mechanical brakes or hydraulic brakes.

The ICE, electrical machines and service brakes are considered as actuators of the vehicle combination **100.** Other actuators may also be present. For example, steering actuators, such as steering servo arrangements, may be provided, and may be implemented as electro-hydraulic actuators. It will be appreciated that each axle and/or wheel may have an associated electrical machine, set of service brakes, and/or set of steering actuators.

**FIG. 1** also shows parameters of the vehicle combination **100,** collectively **105.** Examples of parameters **105** of the vehicle combination **100** may include motion parameters **106** and structural parameters **107.** Examples of motion parameters **106** of the vehicle combination **100** may include, for example, one or more of a velocity v (including a longitudinal velocity *vₓ* and/or a lateral velocity *v_{y}*), a longitudinal acceleration *aₓ*, a lateral acceleration *a_{y}*, a propulsion power/torque, and a braking power/torque. The motion parameters **106** may also have an associated capability, for example maximum and/or minimum values of velocity, acceleration and/or power/torque. The motion parameters **106** may also be defined on a unit basis. For example, each unit **110** may have its own velocity and acceleration. Examples of structural parameters **107** of the vehicle combination **100** may include, for example, a length *L,* a width *W,* and a mass *M,* of the vehicle combination **100.** The structural parameters **107** may also be defined on a unit basis. For example, each unit **110** may have its own length, width, and mass. This may additionally allow a load distribution across the units **110** of the vehicle combination **100** to be determined, including a centre of gravity (CoG) in the x, y, and/or z directions. Each unit **110** may also have an associated tyre cornering stiffness, yaw moment of inertia, and axle configuration (e.g., steered/liftable/driven axles in each unit **110**).

In the example of **FIG. 1****,** the vehicle combination **100** includes a set of controllers **160** comprising processing circuitry **170.** The controllers **160** are configured to control components of the vehicle combination **100,** for example the electrical machines, the batteries, and the service brakes. In the example of **FIG. 1****,** the vehicle combination **100** includes a controller **160** for each respective unit **110,** although it will be appreciated that any suitable number of controllers **160** may be present, and that the controllers **160** may be communicatively coupled with each other. The controllers **160** together form a distributed control allocation system for the vehicle combination **100.** In this system, the control allocation may be performed on multiple levels, i.e. first on a level of the vehicle combination **100** as a whole, and then on a level of each vehicle unit **110** individually. Vehicle motion management may therefore be available on a unit level to receive requests from a manual or virtual driver to coordinate the propulsion, braking and steering of the vehicle combination **100.** The controllers **160** may be microcontrollers.

The controllers **160** may receive control signals from a global controller **180** comprising processing circuitry **190.** The global controller **180** may be a vehicle control unit configured to perform various vehicle (unit) control functions, such as vehicle motion management. The global controller **180** may be local to the vehicle combination **100.** For example, the computer system **180** may be implemented in combination with one of the controllers **160,** often the controller **160-1** of the tractor unit **110-1.** In this case, the controller **160-1** of the tractor unit **110-1** may be considered as the global controller configured to determine control inputs for each unit **110.** Alternatively, the global controller **180** may be a remote system implemented at a distance from the vehicle combination **100.** In this example, the global controller **180** may be communicatively coupled to one or more of the controllers **160.** The global controller **180** may be communicatively coupled to the controller(s) **160** in any suitable way, for example via a circuit or any other wired, wireless, or network connection known in the art. Furthermore, the communicative coupling may be implemented as a direct connection between the controller(s) **160** and the global controller **180,** or may be implemented as a connection via one or more intermediate entities.

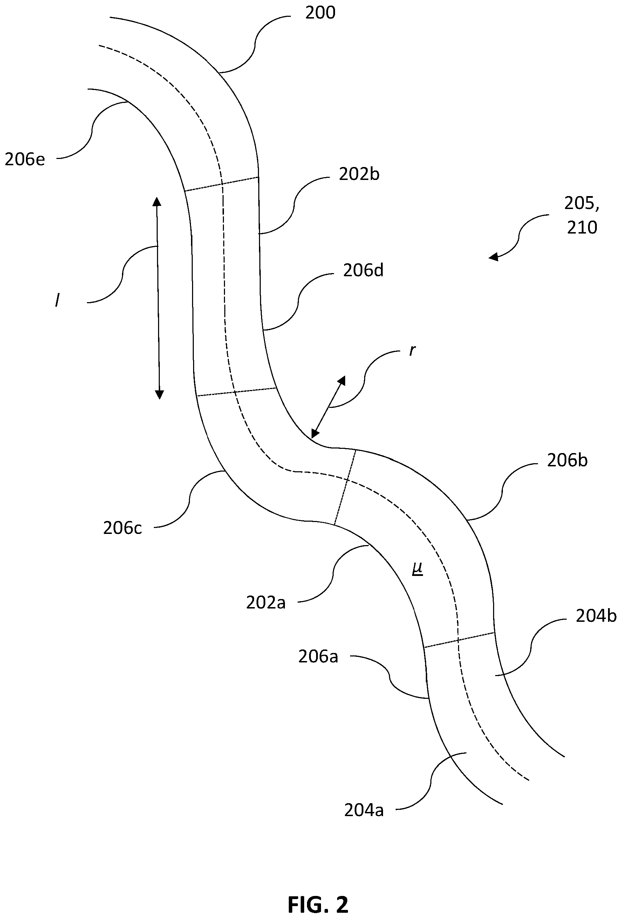

**FIG. 2** illustrates a route **200** along which a vehicle combination **100** may travel. The route **200** may be bounded by verges or shoulders **202a-b** and comprise a number of lanes **204a-b.** While two lanes **204a-b** are shown in **FIG.2****,** it will be appreciated that more or fewer lanes may be present. The route **200** may be characterised by route parameters **205** such as one or more curve radii *r*, a surface friction *µ*, a gradient in a longitudinal and/or lateral direction, and/or a speed limit. The route **200** may be divided into a number of sections **206a-e.** Each section **206a-e** may have its own respective route parameters **205,** including a section length *l*. Whilst a curved path is shown in **FIG. 2****,** it will be appreciated that the approaches disclosed herein are applicable to any suitable operation of the vehicle combination **100,** including straight-line driving. The route **200** or sections **206a-e** may have their own respective environmental parameters **210,** such as traffic and weather conditions.

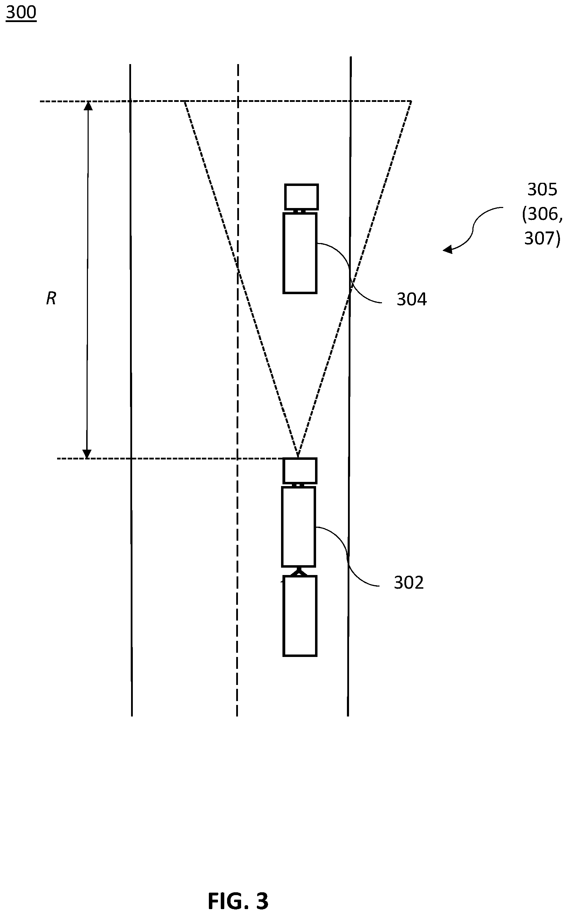

**FIG. 3** illustrates a section **300** of road, such as a section **206a-e** of the route **200** shown in **FIG.2****.** The section **300** of route is being travelled by a vehicle combination **302,** hereafter referred to as a host vehicle combination **302.** The host vehicle combination **302** may be, for example, a vehicle combination **100** as described in relation to **FIG. 1****.** A visible range R may be defined from the host vehicle combination **302.**

The visible range *R* may be determined in any suitable way. For example, the visible range *R* may be defined by the visibility range of a driver of the host vehicle combination **302.** In this case, a default value could be used corresponding to an average visibility range of a human, or a minimum legal visibility range for a driver. Alternatively, a driver may input a personal value for their own visibility range. In some examples, the visibility range R may be determined based on apparatus associated with the vehicle combination **302.** For example, a (e.g. forward-facing) camera, radar, or LIDAR apparatus of the host vehicle combination **302** could be used to provide the visible range *R* using techniques known in the art. In some examples, other vehicles or roadside sensors that form part of an intelligent transportation system could be used to provide the visible range *R* for different sections **206a-e** of the route **200.** The visible range *R* may be affected by route parameters **205** and/or environmental parameters **210** associated with the section **300** of route. For example, if a curve is upcoming along the route around which the driver or camera cannot see, the visible range *R* may be limited. In some examples, mapping technology such as GPS may be used to determine any blind corners (caused by, e.g., steep inclines and curves) or obstacles along the route **200** and the visible range *R* may be determined based on a current location of the combination **302.** Similarly, if weather conditions such as fog, rain, daylight, sun position, and the like limit visibility, the visible range *R* may be affected. In some examples, a default value can be set and then updated based on one or more of the factors discussed above. In some examples, a safety margin may be applied to the visible range *R*, which may be based on the speed of the host vehicle combination **302** or a preceding vehicle.

**FIG. 3** also shows a vehicle **304** preceding the host vehicle combination **302,** hereafter referred to as a preceding vehicle **304.** The preceding vehicle **304** may also be a vehicle combination, for example, a vehicle combination **100** as described in relation to **FIG. 1****.** The preceding vehicle **304** may also be any other type of vehicle, such as trucks, buses, construction equipment, and personal vehicles such as cars, vans, or motorbikes. The preceding vehicle **304** may also be described by parameters **305** including motion parameters **306** and structural parameters **307,** such as one or more of a velocity v (including a longitudinal velocity *vₓ* and/or a lateral velocity *v_{y}*), a longitudinal acceleration *aₓ*, a lateral acceleration *a_{y}*, a propulsion power/torque, a braking power/torque, a length *L*, a width *W,* and a mass *M.* The motion parameters **306** may also have an associated capability, for example maximum and/or minimum values of velocity, acceleration and/or power/torque.

At a certain point, it may desired for the host vehicle combination **302** to overtake the preceding vehicle **304,** or indeed two or more preceding vehicles. This may incorporate the longitudinal motion of the host vehicle combination **302** and the preceding vehicle **304,** route parameters **205** such as upcoming turns, speed limits, and surface friction, and environmental parameters **210** such as traffic and weather conditions. Conventional navigation systems and ADASs are often insufficient in addressing the specific needs of multi-unit vehicle combinations such as the host vehicle combination **302.**

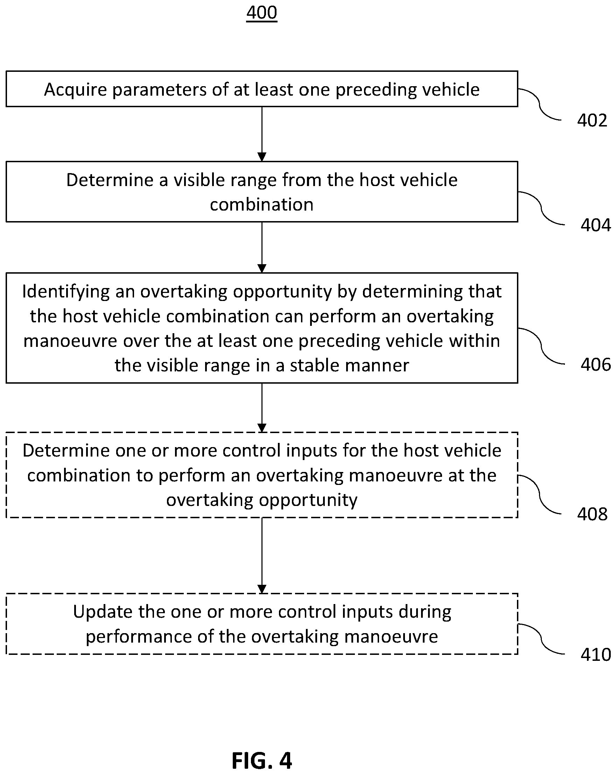

**FIG. 4** is a flow chart of a computer-implemented method **400** according to an example. The method **400** is for determining an overtaking opportunity for a host vehicle combination, such as the host vehicle combination **302.** The method **400** enables overtaking opportunities to be determined that enable stable overtaking of a preceding vehicle. The overtaking opportunities can be determined based on current conditions, and can be used in a selection between two or more routes based on the availability and stability of overtaking possibilities. The method **400** may be implemented by processing circuitry of a computer system (e.g., the processing circuitry **170** of the controller(s) **160,** or the processing circuitry 190 of the global controller **180** described in relation to **FIG. 1**).

At **402,** parameters **305** of at least one preceding vehicle **304** are acquired. As discussed above, the parameters **305** of a preceding vehicle **304** may comprise one or more of a longitudinal velocity *vₓ*, a lateral velocity *v_{y}*, a lateral acceleration, a longitudinal acceleration *aₓ,* a lateral acceleration *a_{y},* a propulsion power/torque, a braking power/torque, a length L, a width *W,* a mass *M,* and a type of the preceding vehicle **304.** The motion parameters **306** may also have an associated capability, for example maximum and/or minimum values of velocity, acceleration and/or power/torque. The motion parameters **306** of the preceding vehicle **304** may be measured values (measured, for example, using a suitable apparatus on the host vehicle combination **302**), received values (received, for example, from a fleet management platform associated with the host vehicle combination **302** and the preceding vehicle **304),** or predicted values (received, for example, based on a known destination and/or turning signals of the preceding vehicle **304).** The structural parameters **307** may be acquired, for example, by measurement (e.g. using a suitable apparatus on the host vehicle combination **302)** or by querying a database containing vehicle information, for example corresponding to license plate numbers of different vehicles or based on a vehicle-type designation by a driver or operator (e.g. a remote operator) of the host vehicle combination **302.**

The acquisition of preceding vehicle parameters **305** at **402** may be triggered in a number of different ways. For example, the one or more preceding vehicles **304** may be detected using image recognition techniques known in the art, based on images from a camera of the host vehicle combination **302.** In some examples, a driver or operator (e.g. a remote operator) of the host vehicle combination **302** may activate an overtaking mode, for example by requesting an overtaking manoeuvre over a preceding vehicle **304,** designating a vehicle type, speed, etc. of the preceding vehicle **304,** and/or specifying a distance within which the overtaking manoeuvre should be performed.

At **404,** a visible range *R* from the host vehicle combination **302** is determined. As discussed above, the visible range *R* may be defined by the visibility range of a driver of the host vehicle combination **302** or the visibility range of a (e.g. forward-facing) camera of the host vehicle combination **302.** The visible range *R* may be affected by route parameters **205** and/or environmental parameters **210** associated with an upcoming section of a route, such as blind corners, weather conditions, and the like.

The visible range *R* is determined for an upcoming section of a route. This may correspond to the remainder of a section of route in which the host vehicle combination **302** is currently travelling, such as the section **300** shown in **FIG. 3****,** or one or more sections further along the route. For example, referring to **FIG. 2****,** if the host vehicle combination **302** is currently travelling in section **204a,** a visible range *R* is determined for the remainder of section **204a** and/or for one or more of sections **204b-e.**

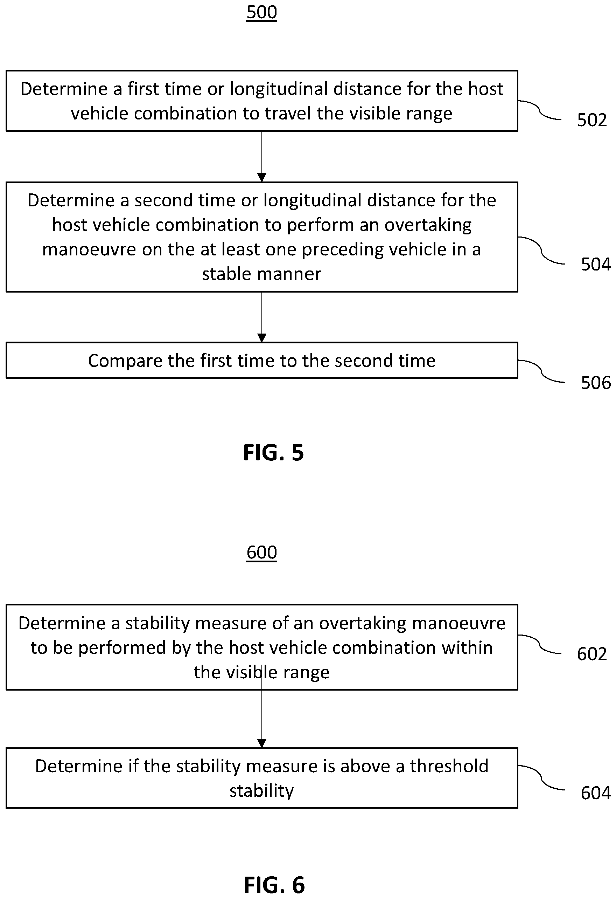

At **406,** an overtaking opportunity is determined by determining that the host vehicle combination **302** can perform an overtaking manoeuvre over the at least one preceding vehicle **304** within the visible range *R* in a stable manner. In a first approach, one or more stable overtaking manoeuvres are modelled, and a corresponding time and/or distance to perform the manoeuvre is determined. The time and/or distance to perform the stable overtaking manoeuvre is then compared to the visible range *R* to determine if the manoeuvre can be performed within the visible range *R*. In a second approach, one or more overtaking manoeuvres are modelled within the visible range *R*, and a corresponding stability measure for the host vehicle combination **302** is determined. It is then determined if the stability measure meets a threshold stability. This will be explained in more detail in relation to **FIGs. 5** and **6****.**

By determining that the host vehicle combination **302** can perform a stable overtaking manoeuvre within the visible range *R*, it can be ensured that only overtaking opportunities where there is visibility of any obstacles hazards are determined. In this way, overtaking opportunities are not determined that would involve entering road sections that cannot yet be seen, such as due to blind corners, poor weather conditions, and the like.

The output of **406** comprises one or more overtaking opportunities for the host vehicle combination **302.** An overtaking opportunity comprises a location along a route at which to overtake a preceding vehicle **304.** The overtaking opportunity may include corresponding manoeuvre parameters (i.e. how the manoeuvre should be performed at the associated location), and/or a probability or risk of success of the manoeuvre.

The modelling at **406** may be performed using any suitable vehicle model. The vehicle model includes one or more parameters **105** of the host vehicle combination **302.** These parameters **105** may include motion parameter capabilities, for example maximum and/or minimum values of velocity, acceleration and/or power/torque, and/or structural parameters **107** such as a length *L*, a width *W,* a mass *M*, a type, a configuration (e.g. number of units **110)** and a load distribution (e.g. CoG) of the host vehicle combination **302.** These parameters **105** may also be defined on a unit basis, and may include the wheelbase of each unit **110,** a type of coupling **140** between units **110,** a tyre cornering stiffness, and axle configuration (e.g., steered/liftable/driven axles in each unit **110).** The vehicle model may be using any suitable vehicle model known in the art, such as a single-track vehicle combination.

The modelling at **406** may be performed based on one or more route parameters 205, such as curve radii *r*, a surface friction *µ*, a gradient in a longitudinal and/or lateral direction, and/or a speed limit. The modelling at **406** may be performed based on one or more environmental parameters **210,** such as traffic information (e.g. obtained from historical data, and/or from current traffic data) and weather conditions (e.g. obtained from weather forecasts) that may affect motion of the host vehicle combination **302.**

The stability of an overtaking manoeuvre can be assessed based on one or more stability measures. The stability measures provide an assessment of whether the behaviour of the host vehicle combination **302** during the overtaking manoeuvre can be considered safe and/or stable. In particular, the stability measures may include one or more of a rearward amplification, a rollover risk, and an off-tracking of the host vehicle combination **302.** For an overtaking manoeuvre to be considered stable, it is desired that one or more of these measures is below a threshold.

Rearward amplification is a phenomenon that occurs in vehicle combinations, where movements of the trailing units become exaggerated compared to the movements of the tractor unit. This can occur when there is lateral motion of the vehicle combination, for example during when navigating turns or overtaking maneuvers. As the tractor unit moves laterally, the motion is transmitted to the trailing units, often with an amplifying effect. The further back a trailer unit is from the tractor unit (i.e., in multi-trailer configurations), the greater the amplification of lateral forces. This can lead to instability or excessive trailer sway, increasing the risk of loss of control or jackknifing. Higher vehicle speed results in a higher rearward amplification. In most articulated vehicles, the highest rearward amplification value occurs around 0.3-0.4 Hz of driver steering input. Typically, the last trailing unit has the highest rearward amplification.

In some examples, a measure of the rearward amplification for a trailing unit **110-2** is defined as the ratio of the maximum absolute yaw rate of the trailing unit **110-2** to the maximum absolute yaw rate of the tractor unit **110-1** during an overtaking manoeuvre. In some examples, a measure of the rearward amplification for a trailing unit **110-2** is defined as the ratio of the maximum absolute lateral acceleration of the trailing unit **110-2** to the maximum absolute lateral acceleration of the tractor unit **110-1** during an overtaking manoeuvre. The ideal value is one, which means no rearward amplification. The rearward amplification can be determined for one or more, including all trailing units of the host vehicle combination **302.**

The determined value(s) of rearward amplification can then be compared to a threshold amount of rearward amplification that is considered stable. If the determined values are below the threshold, the overtaking manoeuvre can be considered stable in terms of rearward amplification. In some examples, only the highest value of rearward amplification (e.g. that for the rearmost unit) may be compared to the threshold. As discussed above, the most desirable value for rearward amplification is 1, which indicates no amplification. This can be used as a basis for setting a threshold based on factors such as vehicle configuration, road conditions (e.g. surface friction), road type, manoeuvre type, vehicle stability functions, and the like. For example, for a lane change for a vehicle combination having more than one trailing unit, a threshold rearward amplification between 1.1 and 1.3 may be acceptable. A lower threshold may be used for lower friction surfaces.

Rollover refers to a situation one or more units of a vehicle combination overturns, usually during sharp turns or high-speed manoeuvres. This can occur when the lateral forces on the trailer (typically from cornering or swerving) are increased. The taller and heavier the load, the higher the CoG, making the unit more susceptible to rollover.

In some examples, a measure of the rollover risk for a unit **110** is defined as the ratio of half the wheelbase of the unit **110** to the CoG height of the unit **110.** In some examples, a measure of the rollover risk for a unit **110** can be provided by measuring the lateral acceleration, roll angle, roll rate, and/or normal tyre forces of the unit **110** during an overtaking manoeuvre. The normal forces or load, for example measured or estimated by a suspension system of the unit **110,** may also be taken into account. Vehicle rollover stability is usually assessed only in steady state conditions, and the methods available include static stability factor (the ratio of half the track width to height of the center of gravity), tilt table ratio (the tangent of the tilt table angle at which one side of the vehicle wheels lifts off the tilt table), and side pull ratio (the ratio of lateral force to vehicle weight at vehicle center of gravity at which one side of the vehicle's wheels lifts off the ground).

If the determined value(s) of the rollover risk are below a threshold, the overtaking manoeuvre can be considered stable in terms of rollover risk. The methods discussed above can all be presented in terms of a threshold called steady state rollover threshold (SRT). The SRT is defined as a level of lateral acceleration at which a vehicle's axle lifts-off from one side, and can be closely related to tilt table ratio. Suitable values of the SRT may be 0.3 to 0.4 g, which can be adjusted based on factors such as vehicle configuration, road conditions (e.g. surface friction), road type, manoeuvre type, vehicle stability functions, and the like.

Off-tracking is the deviation of (a unit **110** of) a vehicle combination **100** from an intended path. This can be defined as the deviation of the tractor unit **110-1** from an intended path, and/or the deviation of a trailing unit **110-2** from the path of the tractor unit **110-1,** particularly when making turns or curves.

In some examples, a measure of the off-tracking of a vehicle combination **100** is defined as the lateral deviation between the path of (the centre of) the front axle of the tractor unit **110-1** and the path of (the centre of) the rearmost axle of the rearmost trailing unit **110-2** during an overtaking manoeuvre. In some examples, a measure of the off-tracking of a vehicle combination **100** is defined as the maximum lateral deviation between the path of (the centre of) the front axle of the tractor unit **110-1** and the path of (the centre of) any axle of the trailing unit(s) **110-2** during an overtaking manoeuvre. If the determined value is below a threshold, the overtaking manoeuvre can be considered stable in terms of off-tracking. The off-tracking threshold may be dependent on factors such as road conditions (e.g. surface friction) and road geometry. For example, a threshold deviation of 0.5m within lane boundaries may be suitable.

The thresholds used for the respective stability measures may be dependent on parameters such as the number of trailing units **110-2,** the mass of the trailing unit **110-2,** the speed of the host vehicle combination **302,** a type of the host vehicle combination **302,** a type of coupling **140** between units **110,** environmental parameters **210,** and the like. In some examples, different thresholds may be set for different stages of an overtaking manoeuvre (e.g. a first lateral, longitudinal, and second lateral movement as will be discussed in relation to **FIG. 5****).**

At **408,** once an overtaking opportunity has been determined, one or more control inputs may be determined for the host vehicle combination **302** to perform an overtaking manoeuvre at the overtaking opportunity. The control inputs may include motion instructions for the host vehicle combination **302,** such as a longitudinal velocity *vₓ*, a lateral velocity *v_{y}*, a lateral acceleration, a longitudinal acceleration *aₓ*, a lateral acceleration *a_{y}*, a propulsion power/torque, and/or a braking power/torque, required for the host vehicle combination **302** to perform an overtaking manoeuvre on the at least one preceding vehicle **304** in a stable manner. The control inputs may include maximum and/or minimum values of the motion instructions. The control inputs may correspond to different stages of the overtaking manoeuvre, such as turning on and indicator, adjusting the vehicle speed, positioning into a target/adjacent lane, and returning to a proper lane once clear of the at least one preceding vehicle **304.**

At **410,** during performance of the overtaking manoeuvre, the one or more control inputs may be updated. For example, it may be determined during performance of the overtaking manoeuvre that one or more of the stability measures discussed above is or will be below a threshold. In which case, the one or more control inputs may be updated to avoid such a situation. For example, lateral acceleration and/or longitudinal velocity of the host vehicle combination **302** may be limited to avoid an instability. This may include stopping the host vehicle combination **302.** In another example, updated parameters **305** of the at least one preceding vehicle **304** may be acquired, which mean that the originally determined control inputs are no longer appropriate. In another example, information regarding traffic (e.g. a vehicle travelling in opposite direction in a two-way road) may be received. Again, the one or more control inputs may be updated to take account of the new scenario.

As discussed above in relation to **406,** a first approach to determining an overtaking opportunity involves the modelling of one or more stable overtaking manoeuvres, and comparison of a time and/or distance to perform the manoeuvre is to the visible range R. This explained in relation to **FIG. 5****,** which is a flow chart of a computer-implemented method 500 for determining that the host vehicle combination **302** can perform an overtaking manoeuvre over the at least one preceding vehicle **304** within the visible range *R* in a stable manner. The method **500** may be implemented by processing circuitry of a computer system (e.g., the processing circuitry **170** of the controller(s) **160,** or the processing circuitry **190** of the global controller **180** described in relation to **FIG. 1****).**

At **502,** a first time is determined. The first time is the time for the host vehicle combination **302** to travel the visible range *R*. This may be determined based on a longitudinal velocity of the host vehicle combination **302** (e.g. a current or predicted longitudinal velocity). This provides a time within which the host vehicle combination **302** can travel without encountering unseen obstacles. Alternatively or additionally, a longitudinal distance for the host vehicle combination **302** to travel the visible range *R* is determined.

At **504,** a second time is determined. The second time is for the host vehicle combination **302** to perform an overtaking manoeuvre on the at least one preceding vehicle **304** in a stable manner. This provides a time within which the host vehicle combination **302** can overtake the least one preceding vehicle **304** without any instability. For example, an overtaking manoeuvre can be modelled that has a rearward amplification, a rollover risk, and/or an off-tracking below a threshold, as discussed above. Alternatively or additionally, a longitudinal distance for the host vehicle combination **302** to perform an overtaking manoeuvre on the at least one preceding vehicle **304** in a stable manner is determined.

The second time (or longitudinal distance) may comprise a time (or longitudinal distance) for the host vehicle combination **302** to make a first lateral movement beyond the width of the at least one preceding vehicle **304** (i.e. to pull out from behind the at least one preceding vehicle **304** into a target/adjacent lane). This may include a safety margin/clearance to ensure the host vehicle combination **302** is outside the preceding vehicle **304.** This may be determined based on parameters **305** of the at least one preceding vehicle **304** such as one or more of a lateral velocity, a lateral acceleration, and a width of the at least one preceding vehicle **304.**

The second time (or longitudinal distance) may also comprise a time (or longitudinal distance) for the host vehicle combination **302** to make a longitudinal movement past the length of the at least one preceding vehicle **304** (i.e. to drive past the at least one preceding vehicle **304).** This may include a safety margin/clearance to ensure the host vehicle combination **302** is past the preceding vehicle **304.** This may be determined based on parameters **305** of the at least one preceding vehicle **304** such as one or more of a longitudinal velocity, a longitudinal acceleration, and a length of the at least one preceding vehicle **304.**

The second time (or longitudinal distance) may also comprise a time (or longitudinal distance) for the host vehicle combination **302** to make a second lateral movement in an opposite direction to the first lateral movement (i.e. to return to the proper lane). This may be determined based on parameters **305** of the at least one preceding vehicle **304** such as one or more of a lateral velocity, a lateral acceleration, and a width of the at least one preceding vehicle **304.**

At **506,** the first time is compared to the second time and, if the second time is less than the first time (i.e. the time to perform a stable overtaking manoeuvre is less that the time to travel the visible range *R*), then an overtaking opportunity is identified. A difference between the first and second times may also be used as a risk metric for the overtaking opportunity, where a larger difference indicates a lower risk. This enables a ranking of overtaking opportunities to be generated. In some examples, a safety factor or buffer may be included to ensure that the second time sufficiently less than the first time for a stable overtaking manoeuvre to be performed.

As also discussed above in relation to **406,** a second approach to determining an overtaking opportunity involves the modelling of one or more overtaking manoeuvres within the visible range *R*, and determining if a stability a corresponding measure meets a threshold stability. This explained in relation to **FIG. 6****,** which is a flow chart of a computer-implemented method **600** for determining that the host vehicle combination **302** can perform an overtaking manoeuvre over the at least one preceding vehicle **304** within the visible range *R* in a stable manner. The method **600** may be implemented by processing circuitry of a computer system (e.g., the processing circuitry **170** of the controller(s) **160,** or the processing circuitry **190** of the global controller **180** described in relation to **FIG. 1****).**

At **602,** a stability measure of an overtaking manoeuvre is determined. The overtaking manoeuvre is to be performed by the host vehicle combination **302** within the visible range *R*. The stability measure provides an assessment of whether the behaviour of the host vehicle combination **302** during the overtaking manoeuvre can be considered safe and/or stable. As discussed above, the stability measure may include one or more of a rearward amplification, a rollover risk, and an off-tracking of the host vehicle combination **302.**

The stability measure may be determined in the manner discussed above. For example, a measure of the rearward amplification for a trailing unit **110-2** may be defined as the ratio of the maximum absolute yaw rate or lateral acceleration of the trailing unit **110-2** to the maximum absolute yaw rate or lateral acceleration of the tractor unit **110-1** during an overtaking manoeuvre. A measure of the rollover risk for a unit **110** may be defined as the ratio of half the wheelbase of the unit **110** to the CoG height of the unit **110,** and/or can be provided by measuring the lateral acceleration, roll angle, and roll rate of the unit **110** during an overtaking manoeuvre. Off-tracking can be defined as the deviation of the tractor unit **110-1** from an intended path, and/or the deviation of a trailing unit **110-2** from the path of the tractor unit **110-1.**

At **604,** it is determined if the stability measure is above a threshold stability and, if so, an overtaking opportunity is identified. In particular, if the determined value(s) of rearward amplification, rollover risk, and/or off-tracking are below a respective threshold, the overtaking manoeuvre can be considered stable and an overtaking opportunity is identified. The thresholds used for the respective stability measures may be dependent on parameters such as the number of trailing units **110-2,** the mass of the trailing unit **110-2,** the speed of the host vehicle combination **302,** a type of the host vehicle combination **302,** a type of coupling **140** between units **110,** environmental parameters **210,** and the like. In some examples, different thresholds may be set for different stages of an overtaking manoeuvre. A difference between the stability measure and its respective threshold may also be used as a risk metric for the overtaking opportunity, where a larger difference indicates a lower risk. This enables a ranking of overtaking opportunities to be generated. In some examples, a safety factor or buffer may be included to ensure that the stability measure sufficiently higher than the threshold stability for a stable overtaking manoeuvre to be performed.

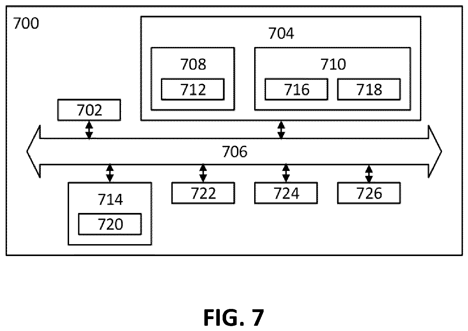

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (160, 180) for identifying an overtaking opportunity for a host vehicle combination (100, 302) comprising a tractor unit (110-1) and at least one trailing unit (110-2), the computer system (160, 180) comprising processing circuitry (170, 190) configured to: acquire parameters (305) of at least one vehicle (304) preceding the host vehicle combination (100, 302); determine a visible range, R, from the host vehicle combination (100, 302) for an upcoming section (206, 300) of a route (200); and identify an overtaking opportunity by determining that the host vehicle combination (100, 302) can perform an overtaking manoeuvre over the at least one preceding vehicle (304) within the visible range, R, in a stable manner based on the acquired parameters (305) of the at least one preceding vehicle (304).
Example 2: The computer system (160, 180) of example 1, wherein the processing circuitry (170, 190) is configured to: determine a first time or longitudinal distance for the host vehicle combination (100, 302) to travel the visible range, *R*; determine a second time or longitudinal distance for the host vehicle combination (100, 302) to perform an overtaking manoeuvre on the at least one preceding vehicle (304) in a stable manner, based on the acquired parameters (305) of the at least one preceding vehicle (304); and determine that the second time or longitudinal distance is less than the first time or longitudinal distance.
Example 3: The computer system (160, 180) of example 2, wherein the second time or longitudinal distance comprises: a time or longitudinal distance to make a first lateral movement beyond the width of the at least one preceding vehicle (304), a time or longitudinal distance to make a longitudinal movement past the length of the at least one preceding vehicle (304), and a time or longitudinal distance to make a second lateral movement in an opposite direction to the first lateral movement.
Example 4: The computer system (160, 180) of example 1, wherein the processing circuitry (170, 190) is configured to: determine a stability measure of an overtaking manoeuvre by the host vehicle combination (100, 302) over the at least one preceding vehicle (304) within the visible range, *R*, based on the acquired parameters (305) of the at least one preceding vehicle (304); and determine that the stability measure is above a threshold stability.
Example 5: The computer system (160, 180) of any preceding example, wherein the parameters (305) of the at least one preceding vehicle comprise one or more of a longitudinal velocity, a longitudinal acceleration, a lateral velocity, a lateral acceleration, a length, a width, and a type of the at least one preceding vehicle (304).
Example 6: The computer system (160, 180) of any preceding example, wherein the processing circuitry (170, 190) is configured to determine that the host vehicle combination (100, 302) can perform an overtaking manoeuvre over the at least one preceding vehicle (304) within the visible range, *R*, in a stable manner based on at least one of one or more route parameters (205), one or more host vehicle combination parameters (105), and one or more environmental parameters (210).
Example 7: The computer system (160, 180) of any preceding example, wherein an overtaking manoeuvre performed in a stable manner comprises one or more of a rearward amplification, a rollover risk, and an off-tracking of the host vehicle combination (100, 302) being below a respective threshold value.
Example 8: The computer system (160, 180) of example 7, wherein the rearward amplification is defined as: the ratio of the maximum absolute yaw rate of a trailing unit (110-2) of the host vehicle combination (100, 302) to the maximum absolute yaw rate of a tractor unit (110-1) of the host vehicle combination (100, 302); or the ratio of the maximum absolute lateral acceleration of a trailing unit (110-2) of the host vehicle combination (100, 302) to the maximum absolute lateral acceleration of a tractor unit (110-1) of the host vehicle combination (100, 302).
Example 9: The computer system (160, 180) of any preceding example, wherein the processing circuitry (170, 190) is further configured to determine one or more control inputs for the host vehicle combination (100, 302) to perform the overtaking manoeuvre.
Example 10: The computer system (160, 180) of example 9, wherein the processing circuitry (170, 190) is further configured to: determine that a stability measure during performance of the overtaking manoeuvre by the host vehicle combination (100, 302) is below a threshold stability; and update the one or more control inputs such that stability measure is above the threshold stability.
Example 11: The computer system (160, 180) of example 9 or 10, wherein the processing circuitry (170, 190) is further configured to update the one or more control inputs during performance of the overtaking manoeuvre by the host vehicle combination (100, 302) based on updated parameters (305) of the at least one preceding vehicle.
Example 12: A vehicle () comprising the computer system (160, 180) of any preceding example.
Example 13: A computer-implemented method (400) for identifying an overtaking opportunity for a host vehicle combination (100, 302) comprising a tractor unit (110-1) and at least one trailing unit (110-2), the computer-implemented method (400) comprising: acquiring (402), by processing circuitry (170, 190) of a computer system (160, 180), parameters (305) of at least one vehicle (304) preceding the host vehicle combination (100, 302); determining (404), by the processing circuitry (170, 190), a visible range, *R*, from the host vehicle combination (100, 302) for an upcoming section (206) of a route (200); and identifying (406), by the processing circuitry (170, 190), an overtaking opportunity by determining (500, 600) that the host vehicle combination (100, 302) can perform an overtaking manoeuvre over the at least one preceding vehicle (304) within the visible range, *R*, in a stable manner based on the acquired parameters (305) of the at least one preceding vehicle (304).
Example 14: The computer-implemented method (400) of example 13, comprising: determining a first time or longitudinal distance for the host vehicle combination (100, 302) to travel the visible range, *R*; determining a second time or longitudinal distance for the host vehicle combination (100, 302) to perform an overtaking manoeuvre on the at least one preceding vehicle (304) in a stable manner, based on the acquired parameters (305) of the at least one preceding vehicle (304); and determining that the second time or longitudinal distance is less than the first time or longitudinal distance.
Example 15: The computer-implemented method (400) of example 14, wherein the second time or longitudinal distance comprises: a time or longitudinal distance to make a first lateral movement beyond the width of the at least one preceding vehicle (304), a time or longitudinal distance to make a longitudinal movement past the length of the at least one preceding vehicle (304), and a time or longitudinal distance to make a second lateral movement in an opposite direction to the first lateral movement.
Example 16: The computer-implemented method (400) of example 13, comprising: determining a stability measure of an overtaking manoeuvre by the host vehicle combination (100, 302) over the at least one preceding vehicle (304) within the visible range, *R*, based on the acquired parameters (305) of the at least one preceding vehicle (304); and determining that the stability measure is above a threshold stability.
Example 17: The computer-implemented method (400) of any of examples 13 to 16, wherein the parameters (305) of the at least one preceding vehicle comprise one or more of a longitudinal velocity, a longitudinal acceleration, a lateral velocity, a lateral acceleration, a length, a width, and a type of the at least one preceding vehicle (304).
Example 18: The computer-implemented method (400) of any of examples 13 to 17, comprising determining that the host vehicle combination (100, 302) can perform an overtaking manoeuvre over the at least one preceding vehicle (304) within the visible range, R, in a stable manner based on at least one of one or more route parameters (205), one or more host vehicle combination parameters (105), and one or more environmental parameters (210).
Example 19: The computer-implemented method (400) of any of examples 13 to 18, wherein an overtaking manoeuvre performed in a stable manner comprises one or more of a rearward amplification, a rollover risk, and an off-tracking of the host vehicle combination (100, 302) being below a respective threshold value.
Example 20: The computer-implemented method (400) of example 19, wherein the rearward amplification is defined as: the ratio of the maximum absolute yaw rate of a trailing unit (110-2) of the host vehicle combination (100, 302) to the maximum absolute yaw rate of a tractor unit (110-1) of the host vehicle combination (100, 302); or the ratio of the maximum absolute lateral acceleration of a trailing unit (110-2) of the host vehicle combination (100, 302) to the maximum absolute lateral acceleration of a tractor unit (110-1) of the host vehicle combination (100, 302).
Example 21: The computer-implemented method (400) of any of examples 13 to 20, further comprising determining one or more control inputs for the host vehicle combination (100, 302) to perform the overtaking manoeuvre.
Example 22: The computer-implemented method (400) of example 21, further comprising determining that a stability measure during performance of the overtaking manoeuvre by the host vehicle combination (100, 302) is below a threshold stability; and updating the one or more control inputs such that stability measure is above the threshold stability.
Example 23: The computer-implemented method (400) of example 21 or 22, further comprising updating the one or more control inputs during performance of the overtaking manoeuvre by the host vehicle combination (100, 302) based on updated parameters (305) of the at least one preceding vehicle.
Example 24: A computer program product comprising program code for performing, when executed by processing circuitry (170, 190), the computer-implemented method (400) of any of examples 13 to 23.
Example 25: A non-transitory computer-readable storage medium comprising instructions, which when executed by processing circuitry (170, 190), cause the processing circuitry to perform the computer-implemented method (400) of any of examples 13 to 23.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (160, 180) for identifying an overtaking opportunity for a host vehicle combination (100, 302) comprising a tractor unit (110-1) and at least one trailing unit (110-2), the computer system (160, 180) comprising processing circuitry (170, 190) configured to:
acquire parameters (305) of at least one vehicle (304) preceding the host vehicle combination (100, 302);
determine a visible range, R, from the host vehicle combination (100, 302) for an upcoming section (206, 300) of a route (200); and
identify an overtaking opportunity by determining that the host vehicle combination (100, 302) can perform an overtaking manoeuvre over the at least one preceding vehicle (304) within the visible range, *R*, in a stable manner based on the acquired parameters (305) of the at least one preceding vehicle (304).

2. The computer system (160, 180) of claim 1, wherein the processing circuitry (170, 190) is configured to:
determine a first time or longitudinal distance for the host vehicle combination (100, 302) to travel the visible range, *R*;
determine a second time or longitudinal distance for the host vehicle combination (100, 302) to perform an overtaking manoeuvre on the at least one preceding vehicle (304) in a stable manner, based on the acquired parameters (305) of the at least one preceding vehicle (304); and
determine that the second time or longitudinal distance is less than the first time or longitudinal distance.

3. The computer system (160, 180) of claim 2, wherein the second time or longitudinal distance comprises:
a time or longitudinal distance to make a first lateral movement beyond the width of the at least one preceding vehicle (304),
a time or longitudinal distance to make a longitudinal movement past the length of the at least one preceding vehicle (304), and
a time or longitudinal distance to make a second lateral movement in an opposite direction to the first lateral movement.

4. The computer system (160, 180) of claim 1, wherein the processing circuitry (170, 190) is configured to:
determine a stability measure of an overtaking manoeuvre by the host vehicle combination (100, 302) over the at least one preceding vehicle (304) within the visible range, R, based on the acquired parameters (305) of the at least one preceding vehicle (304); and
determine that the stability measure is above a threshold stability.

5. The computer system (160, 180) of any preceding claim, wherein the parameters (305) of the at least one preceding vehicle comprise one or more of a longitudinal velocity, a longitudinal acceleration, a lateral velocity, a lateral acceleration, a length, a width, and a type of the at least one preceding vehicle (304).

6. The computer system (160, 180) of any preceding claim, wherein the processing circuitry (170, 190) is configured to determine that the host vehicle combination (100, 302) can perform an overtaking manoeuvre over the at least one preceding vehicle (304) within the visible range, R, in a stable manner based on at least one of one or more route parameters (205), one or more host vehicle combination parameters (105), and one or more environmental parameters (210).

7. The computer system (160, 180) of any preceding claim, wherein an overtaking manoeuvre performed in a stable manner comprises one or more of a rearward amplification, a rollover risk, and an off-tracking of the host vehicle combination (100, 302) being below a respective threshold value.

8. The computer system (160, 180) of claim 7, wherein the rearward amplification is defined as:
the ratio of the maximum absolute yaw rate of a trailing unit (110-2) of the host vehicle combination (100, 302) to the maximum absolute yaw rate of a tractor unit (110-1) of the host vehicle combination (100, 302); or
the ratio of the maximum absolute lateral acceleration of a trailing unit (110-2) of the host vehicle combination (100, 302) to the maximum absolute lateral acceleration of a tractor unit (110-1) of the host vehicle combination (100, 302).

9. The computer system (160, 180) of any preceding claim, wherein the processing circuitry (170, 190) is further configured to determine one or more control inputs for the host vehicle combination (100, 302) to perform the overtaking manoeuvre.

10. The computer system (160, 180) of claim 9, wherein the processing circuitry (170, 190) is further configured to:
determine that a stability measure during performance of the overtaking manoeuvre by the host vehicle combination (100, 302) is below a threshold stability; and
update the one or more control inputs such that stability measure is above the threshold stability.

11. The computer system (160, 180) of claim 9 or 10, wherein the processing circuitry (170, 190) is further configured to update the one or more control inputs during performance of the overtaking manoeuvre by the host vehicle combination (100, 302) based on updated parameters (305) of the at least one preceding vehicle.

12. A vehicle () comprising the computer system (160, 180) of any preceding claim.

13. A computer-implemented method (400) for identifying an overtaking opportunity for a host vehicle combination (100, 302) comprising a tractor unit (110-1) and at least one trailing unit (110-2), the computer-implemented method (400) comprising:
acquiring (402), by processing circuitry (170, 190) of a computer system (160, 180), parameters (305) of at least one vehicle (304) preceding the host vehicle combination (100, 302);
determining (404), by the processing circuitry (170, 190), a visible range, R, from the host vehicle combination (100, 302) for an upcoming section (206) of a route (200); and
identifying (406), by the processing circuitry (170, 190), an overtaking opportunity by determining (500, 600) that the host vehicle combination (100, 302) can perform an overtaking manoeuvre over the at least one preceding vehicle (304) within the visible range, R, in a stable manner based on the acquired parameters (305) of the at least one preceding vehicle (304).

14. A computer program product comprising program code for performing, when executed by processing circuitry (170, 190), the computer-implemented method (400) of claim 13.

15. A non-transitory computer-readable storage medium comprising instructions, which when executed by processing circuitry (170, 190), cause the processing circuitry to perform the computer-implemented method (400) of claim 13.

## Amended claims

### Amended claims in accordance with Rule 137(2) EPC.

1. A computer system (160, 180) for identifying an overtaking opportunity for a host vehicle combination (100, 302) comprising a tractor unit (110-1) and at least one trailing unit (110-2), the computer system (160, 180) comprising processing circuitry (170, 190) configured to:
acquire parameters (305) of at least one vehicle (304) preceding the host vehicle combination (100, 302);
determine a visible range, R, from the host vehicle combination (100, 302) for an upcoming section (206, 300) of a route (200); and
identify an overtaking opportunity by determining that the host vehicle combination (100, 302) can perform an overtaking manoeuvre over the at least one preceding vehicle (304) within the visible range, R, in a stable manner based on the acquired parameters (305) of the at least one preceding vehicle (304).

2. The computer system (160, 180) of claim 1, wherein the processing circuitry (170, 190) is configured to:
determine a first time or longitudinal distance for the host vehicle combination (100, 302) to travel the visible range, R;
determine a second time or longitudinal distance for the host vehicle combination (100, 302) to perform an overtaking manoeuvre on the at least one preceding vehicle (304) in a stable manner, based on the acquired parameters (305) of the at least one preceding vehicle (304); and
determine that the second time or longitudinal distance is less than the first time or longitudinal distance.

3. The computer system (160, 180) of claim 2, wherein the second time or longitudinal distance comprises:
a time or longitudinal distance to make a first lateral movement beyond the width of the at least one preceding vehicle (304),
a time or longitudinal distance to make a longitudinal movement past the length of the at least one preceding vehicle (304), and
a time or longitudinal distance to make a second lateral movement in an opposite direction to the first lateral movement.

4. The computer system (160, 180) of claim 1, wherein the processing circuitry (170, 190) is configured to:
determine a stability measure of an overtaking manoeuvre by the host vehicle combination (100, 302) over the at least one preceding vehicle (304) within the visible range, R, based on the acquired parameters (305) of the at least one preceding vehicle (304); and
determine that the stability measure is above a threshold stability.

5. The computer system (160, 180) of any preceding claim, wherein the parameters (305) of the at least one preceding vehicle comprise one or more of a longitudinal velocity, a longitudinal acceleration, a lateral velocity, a lateral acceleration, a length, a width, and a type of the at least one preceding vehicle (304).

6. The computer system (160, 180) of any preceding claim, wherein the processing circuitry (170, 190) is configured to determine that the host vehicle combination (100, 302) can perform an overtaking manoeuvre over the at least one preceding vehicle (304) within the visible range, R, in a stable manner based on at least one of one or more route parameters (205), one or more host vehicle combination parameters (105), and one or more environmental parameters (210).

7. The computer system (160, 180) of any preceding claim, wherein an overtaking manoeuvre performed in a stable manner comprises one or more of a rearward amplification, a rollover risk, and an off-tracking of the host vehicle combination (100, 302) being below a respective threshold value.

8. The computer system (160, 180) of claim 7, wherein the rearward amplification is defined as:
the ratio of the maximum absolute yaw rate of a trailing unit (110-2) of the host vehicle combination (100, 302) to the maximum absolute yaw rate of a tractor unit (110-1) of the host vehicle combination (100, 302); or
the ratio of the maximum absolute lateral acceleration of a trailing unit (110-2) of the host vehicle combination (100, 302) to the maximum absolute lateral acceleration of a tractor unit (110-1) of the host vehicle combination (100, 302).

9. The computer system (160, 180) of any preceding claim, wherein the processing circuitry (170, 190) is further configured to determine one or more control inputs for the host vehicle combination (100, 302) to perform the overtaking manoeuvre.

10. The computer system (160, 180) of claim 9, wherein the processing circuitry (170, 190) is further configured to:
determine that a stability measure during performance of the overtaking manoeuvre by the host vehicle combination (100, 302) is below a threshold stability; and
update the one or more control inputs such that stability measure is above the threshold stability.

11. The computer system (160, 180) of claim 9 or 10, wherein the processing circuitry (170, 190) is further configured to update the one or more control inputs during performance of the overtaking manoeuvre by the host vehicle combination (100, 302) based on updated parameters (305) of the at least one preceding vehicle.

12. A vehicle (100, 302) comprising the computer system (160, 180) of any preceding claim.

13. A computer-implemented method (400) for identifying an overtaking opportunity for a host vehicle combination (100, 302) comprising a tractor unit (110-1) and at least one trailing unit (110-2), the computer-implemented method (400) comprising:
acquiring (402), by processing circuitry (170, 190) of a computer system (160, 180), parameters (305) of at least one vehicle (304) preceding the host vehicle combination (100, 302);
determining (404), by the processing circuitry (170, 190), a visible range, R, from the host vehicle combination (100, 302) for an upcoming section (206) of a route (200); and
identifying (406), by the processing circuitry (170, 190), an overtaking opportunity by determining (500, 600) that the host vehicle combination (100, 302) can perform an overtaking manoeuvre over the at least one preceding vehicle (304) within the visible range, R, in a stable manner based on the acquired parameters (305) of the at least one preceding vehicle (304).

14. A computer program product comprising program code for performing, when executed by processing circuitry (170, 190), the computer-implemented method (400) of claim 13.

15. A non-transitory computer-readable storage medium comprising instructions, which when executed by processing circuitry (170, 190), cause the processing circuitry to perform the computer-implemented method (400) of claim 13.
